# EUROPÄISCHE PATENTSCHRIFT

(11) **EP 1 741 843 B1**
(45) Veröffentlichungstag und Bekanntmachung des Hinweises auf die Patenterteilung: **13.05.2009**
(21) Anmeldenummer: 06116496.8
(22) Anmeldetag: 03.07.2006
(51) Int. Cl.: E03C 1/10, E03B 7/07

(54) **Systemtrenner**
Backflow prevention assembly
Ensemble anti-retour

(30) Priorität: 04.07.2005 DE 102005031422
(43) Veröffentlichungstag der Anmeldung: 10.01.2007
(73) Patentinhaber: HANS SASSERATH & CO KG, 41352 Korschenbroich (DE)
(72) Erfinder: Hecking, Willi, 41372,Niederkrüchten-Elmpt (DE)
(74) Vertreter: Weisse, Renate

(56) Entgegenhaltungen:
- DE-A1- 10 214 747
- DE-B3- 10 335 379

## Beschreibung

### Technisches Gebiet

Die Erfindung betrifft einen Systemtrenner zum physischen Trennen eines stromaufwärtigen Flüssigkeitssystems von einem stromabwärtigen Flüssigkeitssystem nach dem Oberbegriff des Anspruchs 1.

Systemtrenner oder Rohrtrenner dienen dazu, einen Rückfluß von Flüssigkeit aus einem stromabwärtigen Flüssigkeitssystem in ein stromaufwärtiges Flüssigkeitssystem sicher zu verhindern. Das stromaufwärtige Flüssigkeitssystem kann dabei ein Trinkwassersystem sein. Das stromabwärtige Flüssigkeitssystem kann z.B. ein Heizungssystem sein. Es muß unbedingt verhindert werden, daß verunreinigtes Wasser aus dem Heizungssystem beim Auf- oder Nachfüllen des Heizungssystems in das Trinkwassersystem zurückfließt, beispielsweise dadurch, daß der Druck im Trinkwassersystem aus irgendeinem Grund zusammenbricht.

Es gibt sog. Rückflußverhinderer. Das sind federbelastete Ventile, welche einen Flüssigkeitsdurchfluß nur in einer Richtung, nämlich vom stromaufwärtigen zum stromabwärtigen System zulassen. Solche Rückflußverhinderer können aber undicht werden. Daher ist z.B. bei Trinkwasser und Heizungswasser eine Trennung der Flüssigkeitssysteme allein durch Rückflußverhinderer nicht zulässig. Es muß eine physische Trennung der Flüssigkeitssysteme erfolgen, derart daß im Störfall zwischen den Systemen eine Verbindung zu einem Ablauf und zur Atmosphäre hergestellt wird.

System- oder Rohrtrenner enthalten einen stromaufwärtigen, an das stromaufwärtige Flüssigkeitssystem angeschlossenen Rückflußverhinderer und einen stromabwärtigen mit dem stromabwärtigen System verbundenen Rückflußverhinderer. Zwischen den Rückflußverhinderern ist ein druckgesteuertes Auslaßventil angeordnet, welches einen Durchgang von dem stromaufwärtigen Flüssigkeitssystem zu dem stromabwärtigen Flüssigkeitssystem herstellt, wenn zwischen den beiden Flüssigkeitssystemen ein ausreichendes Druckgefälle besteht, so daß die Flüssigkeit sicher nur von dem stromaufwärtigen zum stromabwärtigen Flüssigkeitssystem strömen kann. Wenn dieses Druckgefälle nicht besteht, stellt das Auslaßventil eine Verbindung des Raumes zwischen den Rückflußverhinderern mit der Atmosphäre und einem Ablauf her.

### Stand der Technik

Aus der DE 198 54 951 C2 ist eine Anordnung bekannt, bei der der stromaufwärtige Rückflußverhinderer in einem koaxialen Metallbalg sitzt. Bei ansteigendem Eingangsdruck dehnt sich der Metallbalg aus und bewegt das Auslaßventil bis der Ventilsitz abdichtend am Ventilkegel des Auslaßventils sitzt. Erst dann öffnet der stromaufwärtige Rückflußverhinderer.

Aus der DE 199 02 574 C1 ist eine Anordnung bekannt, bei der ein rohrförmiges, federbeaufschlagtes Absperrorgan des Auslaßventils mit einem Kolben gegenüber einem feststehenden Gehäuseboden beweglich geführt ist. Der Kolben dient gleichzeitig zur Druckentlastung des Auslaßventils.

Die DE 203 20 356 U1 offenbart eine Anordnung mit zwei Rückschlagventilen für ein Hochdruckreinigungsgerät. Bei der Anordnung ist das stromaufwärtige Ventil mit einer Membrandichtung gegenüber dem Gehäuse abgedichtet. Dieses sitzt in einem federbeaufschlagten Ventilkörper.

Der Rohrtrenner gemäß DE 102 14 747 weist die Merkmalen des Oberbegriffs des Anspruchs 1 auf. Bei dieser , ist das Auslaßventil ein in einem Armaturengehäuse verschiebbarer Kolben. Dieser Kolben weist einen zentralen Durchgang und an seiner stromabwärtigen Stirnfläche einen ringförmigen Ventilsitz auf, der an einer armaturenfesten Ringdichtung axial zur Anlage kommt. Der Durchgang stellt dann eine zur Atmosphäre hin geschlossene Verbindung zwischen stromaufwärtigem und stromabwärtigen Flüssigkeitssystem her. Der stromaufwärtige Rückflußverhinderer sitzt in dem Durchgang. Dadurch wirkt auf den Kolben gegen eine in Öffnungsrichtung wirksame Feder die Druckdifferenz zwischen dem Eingangsdruck im stromaufwärtigen Flüssigkeitssystem und einem Mitteldruck, der sich in einem Mitteldruckraum zwischen Kolben und stromabwärtigen Rückflußverhinderer einstellt. Damit ein Durchfluß zu dem stromabwärtigen System stattfinden kann, muß schon diese Druckdifferenz ein vorgegebenes, durch die Federkraft bestimmtes Maß überschreiten.

Wenn -als Beispiel- ein unter geringem Wasserdruck stehendes Heizungssystem aus einem Trinkwassersystem über den Systemtrenner gefüllt werden soll, wird durch den Eingangsdruck im Trinkwassersystem zunächst der Kolben des Auslaßventils gegen die Wirkung der darauf wirkenden Feder in seine Betriebsstellung gedrückt, in welcher er die Verbindung zur Atmosphäre und zu dem Ablauf unterbricht und eine Verbindung zwischen Trinkwassersystem und Heizungssystem herstellt. Dann werden die stromaufwärtigen und stromabwärtigen Rückflußverhinderer aufgedrückt. Es strömt Trinkwasser zu dem Heizungssystem und füllen dieses auf oder nach.

Das Heizungssystem wird dann auf einen Ausgangsdruck aufgefüllt, der unterhalb des Eingangsdrucks liegt. Im normalen Betrieb wird die Differenz zwischen Eingangsdruck und Ausgangsdruck durch den Druckabfall an den Rückflußverhinderern, also durch die Stärke der Federn der Rückflußverhinderer bestimmt. Der Mitteldruck liegt entsprechend dem Druckabfall an dem stromaufwärtigen Rückflußverhinderer und dem Druckabfall an dem stromaufwärtigen Rückflußverhinderer dazwischen. Die Druckdifferenz zwischen Eingangsdruck und Mitteldruck muß größer sein als ein durch die Belastungsfeder des Ventilkörpers des Auslaßventils bestimmter Grenzwert.

Der Eingangsdruck kann nun schwanken. Das kann dazu führen, daß die Druckdifferenz zwischen Eingangsdruck und Mitteldruck unter den Grenzwert absinkt. Dann öffnet das Auslaßventil zur Atmosphäre hin. Es fließt eine geringe Menge Wasser aus. Das bewirkt sofort ein Absinken des Mitteldrucks. Das Auslaßventil schließt wieder. Durch die Schwankungen des Eingangsdrucks wird ein Tröpfeln des Auslaßventils hervorgerufen.

Dieses Tröpfeln ist unnötig, denn die Druckschwankungen des Eingangsdrucks sind unkritisch. Es fließt über den dichten stromabwärtigen Rückflußverhinderer kein Heizungswasser in das Trinkwassersystem zurück.

### Offenbarung der Erfindung

Der Erfindung liegt die Aufgabe zugrunde, ein unnötiges Öffnen des Auslaßventils infolge von Druckschwankungen des Eingangsdruckes zu vermeiden.

Erfindungsgemäß wird diese Aufgabe gelöst durch ein den Mitteldruckraum begrenzendes Hubglied, das auf einer Seite von dem Eingangsdruck und auf der anderen Seite von dem Mitteldruck beaufschlagt und von der Druckdifferenz gegen die Wirkung einer Belastungsfeder zwischen zwei Anschlägen beweglich ist.

Normalerweise wird das Hubglied durch die Druckdifferenz in Anlage an einem mitteldruckseitigen Anschlag gehalten. Bei Absinken des Eingangsdruckes hebt das Hubglied unter dem Einfluß der Belastungsfeder von dem Anschlag ab. Dadurch wird das Volumen des Mitteldruckraumes vergrößert. Da der Mitteldruckraum im stationären Zustand abgeschlossen und die Flüssigkeit inkompressibel ist, bewirkt schon ein geringer Hub des Hubgliedes ein Absinken des Mitteldrucks. Der Mitteldruck folgt in einem gewissen Maße dem absinkenden Eingangsdruck. Durch den Hub wird die Belastungsfeder des Hubgliedes entspannt. Es tritt ein neuer Gleichgewichtszustand ein, bei welchem eine etwas verminderte Druckdifferenz, die aber noch nicht zum Öffnen des Auslaßventils führt, der etwas entspannten Belastungsfeder das Gleichgewicht hält. Bei starkem Absinken des Eingangsdrucks gelangt schließlich das Hubglied an den anderen Anschlag. Ein weiteres Absinken des Eingangsdrucks läßt dann die Druckdifferenz unter den oben erläuterten Grenzwert absinken und bewirkt ein Öffnen des Auslaßventils zur Atmosphäre.

Wenn der Mitteldruck ansteigt, weil der stromabwärtige Rückflußverhinderer undicht ist, wird das Hubglied an den "äußeren" Anschlag gedrückt. Dann sinkt die Druckdifferenz unter den Grenzwert und das Auslaßventil spricht in üblicher Weise an.

Vorzugsweise ist die Belastungsfeder stromaufwärtig an dem Hubglied abgestützt und die Federkraft wirkt über das Hubglied bei Erreichen seines stromaufwärtigen Anschlags auf den Auslaßventilkörper, so daß die Belastungsfeder, die auf das Hubglied wirkt, gleichzeitig als Belastungsfeder für den Auslaßventilkörper dient. Auf diese Weise werden weniger Federn benötigt. Es sind keine separaten Federn für das Hubglied und den Auslaßventilkörper mehr erforderlich. Vielmehr kann die gleiche Feder für beide Bauteile verwendet werden. Da sich die immer vorhandenen Fertigungstoleranzen für die Federn addieren, kann so die Einstellgenauigkeit der Druckdifferenz verbessert werden.

In der Betriebsstellung drückt die gemeinsame Belastungsfeder gegen das Hubglied, so daß diese am stromaufwärtigen Anschlag anliegt. Dann wirkt die Federkraft auch auf den Auslaßventilkörper. Der Auslaßventilkörper wird also seinerseits von der Federkraft gegen den Eingangsdruck in seiner Position gehalten.

Bei geringem Druckanstieg des Eingangsdrucks wird das Hubglied gegen die Federkraft der gemeinsamen Belastungsfeder bis zum stromabwärtigen Anschlag bewegt. Steigt der Druck weiter, so öffnet auch der Rückflußverhinderer.

Eine bevorzugte Ausführung der Erfindung sieht vor, daß
(a) der stromaufwärtige Rückflußverhinderer in dem mit einem zentralen Durchbruch versehenen Auslaßventilkörper sitzt,
(b) das Hubglied ein Kompensationskolben mit einem zentralen Durchbruch ist, der seinerseits zwischen zwei Anschlägen geführt ist,
(c) ein Ventilsitz des Rückflußverhinderers in dem Kompensationskolben sitzt und
(d) auf dem Ventilsitz ein federbelasteter Ventilschließkörper des Rückflußverhinderers aufsitzt.

Ausgestaltungen der Erfindung sind Gegenstand der Unteransprüche. Zwei Ausführungsbeispiele der Erfmdung ist nachstehend unter Bezugnahme auf die zugehörigen Zeichnungen näher erläutert.

### Kurze Beschreibung der Zeichnungen

- Fig.1: zeigt einen Längsschnitt durch einen Rohrtrenner mir einem Kompensationskolben
- Fig.2: zeigt eine Ansicht "X" von Fig.1, bei welcher der Kompensationskolben durch die Druckdifferenz an seinen mitteldruckseitigen Anschlag bewegt ist.
- Fig.3: zeigt eine Ansicht "X" von Fig.1, bei welcher der Kompensationskolben durch die Druckdifferenz an seinen einlaßdruckseitigen Anschlag bewegt ist.
- Fig.4: ist ein Diagramm und veranschaulicht die Wirkungsweise des Rohrtrenners ohne Kompensationskolben.
- Fig.5: ist ein Diagramm und veranschaulicht die Wirkungsweise des Rohrtrenners mit Kompensationskolben.
- Fig.6: zeigt einen Ausschnitt aus einem Systemtrenner nach einem zweiten Ausführungsbeispiel in Betriebsstellung.
- Fig.7: zeigt einen Ausschnitt aus dem Systemtrenner in Fig.6 in Kompensationsstellung.
- Fig.8: zeigt einen Ausschnitt aus dem Systemtrenner in Fig.6 in Durchflußstellung.
- Fig.9: zeigt einen Ausschnitt aus dem Systemtrenner in Fig.6 in Trennstellung.

### Beschreibung der Ausführungsbeispiele

### Ausführungsbeispiel 1

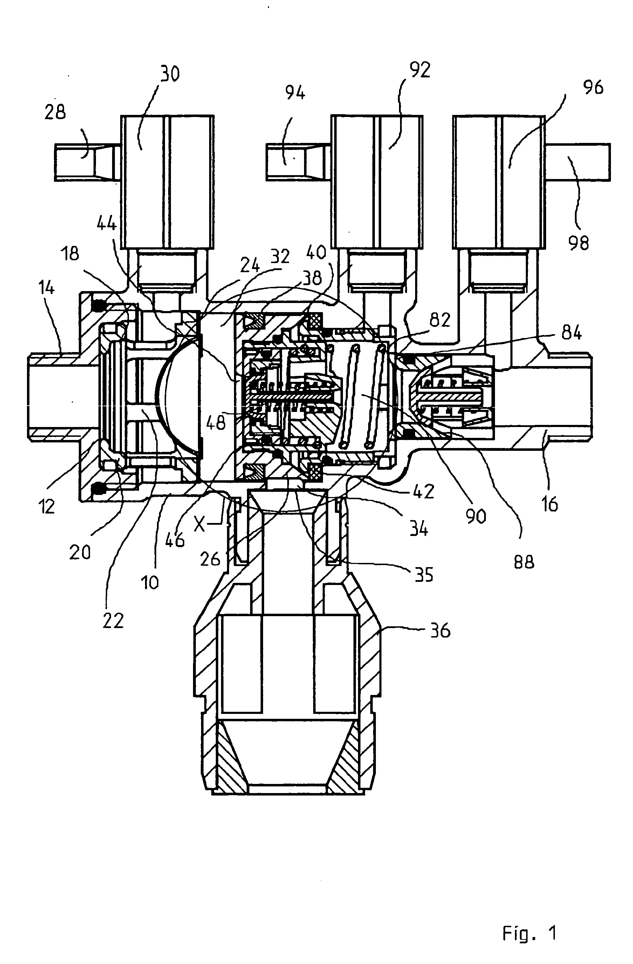

In Fig.1 ist mit 10 ein rohrartiges Armaturengehäuse bezeichnet. Das Armaturengehäuse 10 ist an seiner stromaufwärtigen Ende durch einen Stopfen 12 abgeschlossen. Der Stopfen 12 weist einen Einlaßstutzen 14 auf. Das Armaturengehäuse 10 weist am entgegengesetzten Ende ein Auslaßstutzen 16 auf. Anschließend an den Stopfen 12 sitzt in dem Armaturengehäuse 10 ein Stützkörper 18. Der Stützkörper 18 bildet einen ersten Ring 20, der über Stege 22 mit einem zweiten Ring 24 verbunden ist. Der zweite Ring bildet einen Anschlag für einen Ventilkörper, der von einem Kolben 26 gebildet ist.

Zwischen den Stegen ist der Einlaßstutzen 14 mit einem Prüfanschluß 28 mit einem Kugelventil 30 verbunden. Über den Prüfanschluß 28 kann der Eingangsdruck mittels eines Manometers gemessen werden.

In dem Armaturengehäuse 10 ist eine zylindrische Kammer 32 gebildet. In der Kammer 32 ist der Kolben 26 geführt. Von der Kammer 32 geht ein Auslaß 34 ab, welcher einen mit der Atmosphäre verbundenen Ablaufstutzen 36 aufweist.

Der Kolben 26 dient als Ventilkörper. Der Kolben 26 ist auf seiner Mantelfläche mit einer Dichtung 38 abdichtend in der zylindrischen Kammer 32 geführt. An seiner stromabwärtigen Stirnfläche bildet der Kolben 26 einen ringförmigen Ventilsitz 40. Der Ventilsitz 40 liegt in der in Fig.1 dargestellten, stromabwärtigen Endstellung an einer Sitzdichtung 42 an. Mit der Mantelfläche überdeckt der Kolben 26 den Auslaß 34. Das ist ein Auslaßventil 35.

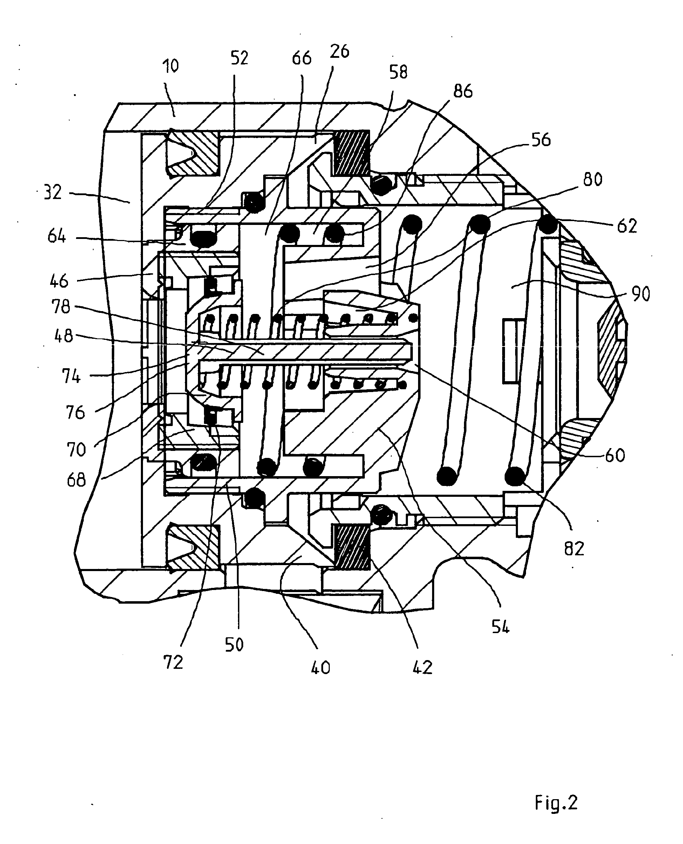

Der Kolben 26 weist einen zentralen Durchgang 44 auf. An dem Kolben 26 ist an dessen stromaufwärtigem Ende ein nach innen ragender, ringscheibenförmiger Rand 46 gebildet. In dem Durchgang sitzt ein stromaufwärtiger Rückflußverhinderer 48. Ein Gehäuse 50 des Rückflußverhinderers 48 (Fig.2) weist einen kragenförmigen äußeren Mantelteil 52 auf. Dieser Mantelteil 52 ist an einen Ringkörper 54 angeformt. Der Ringkörper 54 ist mit einem außermittigen, axialen Durchgang 56 versehen. Weiterhin weist der Ringkörper längs seines Umfangs eine Ringnut 58 auf. Um einen zentralen Durchbruch 60 des Ringkörpers 54 herum ist eine weitere Ringnut 62 gebildet. Die Ringnuten 58 und 62 sind zur stromaufwärtigen Seite hin offen.

In dem Mantelteil 52 ist ein Kompensationskolben 64 geführt. Der Kompensationskolben 64 ist mittels eines Dichtringes 66 gegen die Innenfläche des Mantelteils 52 abgedichtet. Der Kompensationskolben 64 ist zwischen zwei Anschlägen beweglich. Ein stromabwärtiger Anschlag wird von der Stirnfläche des Ringkörpers 54 am Rand der Ringnut 58 gebildet. Ein stromaufwärtiger Anschlag wird von dem Rand 46 des Kolbens 26 gebildet, an welchem der Kompensationskolben 64 mit einem Ringvorsprung 68 zur Anlage kommt. Der Kompensationskolben 64 ist schalenförmig mit einem zylindrischen Mantel und einem zentralen Durchbruch 70.

In dem Kompensationskolben 64 sitzt ein Ventilsitz 72 des stromaufwärtigen Rückflußverhinderers. Der Ventilsitz 72 wirkt mit einem Ventilschließkörper 74 zusammen. Der Ventilschließkörper 74 weist einen konischen Kopf 76 und einen Schaft 78 auf. Der Schaft 78 ist in dem Durchbruch 60 geführt. Der Schaft 78 ist von einer Schraubenfeder 80 umgeben. Die Schraubenfeder 80 ist mit einem Ende in der Ringnut 62 geführt und liegt mit dem anderen Ende an dem Kopf 76 an. Eine Schraubenfeder 82 ist an einer Schulter 84 auf der Innenseite des Armaturengehäuses 10 abgestützt und liegt stromabwärts an dem Ringkörper 54 an. Dadurch wird über den Rand 46 der Kolben 26 des Auslaßventils von der Feder 82 belastet.

In der Ringnut 58 des Ringkörpers 54 sitzt eine weitere Schraubenfeder 86. Die Schraubenfeder 86 liegt an der stromabwärtigen Stirnfläche des Kompensationskolbens 64 an. Die Schraubenfeder 86 sucht den Kompensationskolben zur stromaufwärtigen Seite hin zu drücken. Der Schraubenfeder 86 wirkt die Druckdifferenz zwischen dem Eingangsdruck und dem Druck hinter dem stromaufwärtigen Rückflußverhinderer 48 entgegen.

Stromab von der beschriebenen Anordnung sitzt in dem Armaturengehäuse ein stromabwärtiger Rückflußverhinderer 88 (Fig.1). Der Rückflußverhinderer 88 ist im Prinzip ähnlich aufgebaut wie der stromaufwärtige Rückflußverhinderer 48 und daher nicht im einzelnen beschrieben. Beide Rückflußverhinderer 48 und 88 öffnen nur in Richtung vom Eingangsdruck zum Ausgangsdruck hin. Zwischen dem Kolben 26 und dem stromabwärtigen Rückflußverhinderer 88 ist ein Mitteldruckraum 90 gebildet. Der Mitteldruckraum 90 ist über ein Kugelventil 92 mit einem Prüfanschluß 94 verbunden. Über diesen Prüfanschluß kann ein Mitteldruck gemessen werden. Der Auslaßstutzen 16, in welchem der Ausgangsdruck herrscht, ist über ein Kugelventil 96 mit einem Prüfanschluß 98 verbunden.

Die Schraubenfeder 80 des Rückflußverhinderers 48 ist stärker als die Schraubenfeder 82, die auf den Kolben 26 wirkt. Daher öffnet der Rückflußverhinderer 48 erst, wenn der Kolben 26 durch die Druckdifferenz zwischen Eingangsdruck und dem im Mitteldruckraum herrschenden Mitteldruck in seine stromabwärtige Endstellung bewegt ist. Wenn auf diese Weise der Durchgang zum Auslaßstutzen gegenüber dem Auslaß 34 und der Atmosphäre abgeschlossen ist, werden die Rückflußverhinderer von dem Wasserdruck aufgedrückt. Das Heizungssystem wird auf einen Ausgangsdruck aufgefüllt, der etwas unter dem Eingangsdruck liegt. Der Kompensationskolben 64 liegt unter dem Einfluß der Druckdifferenz gegen den Einfluß der Schraubenfeder 86 an dem stromabwärtigen Anschlag, d.h. an der Stirnfläche des Ringkörpers 54 an, wie in Fig.2 dargestellt ist.

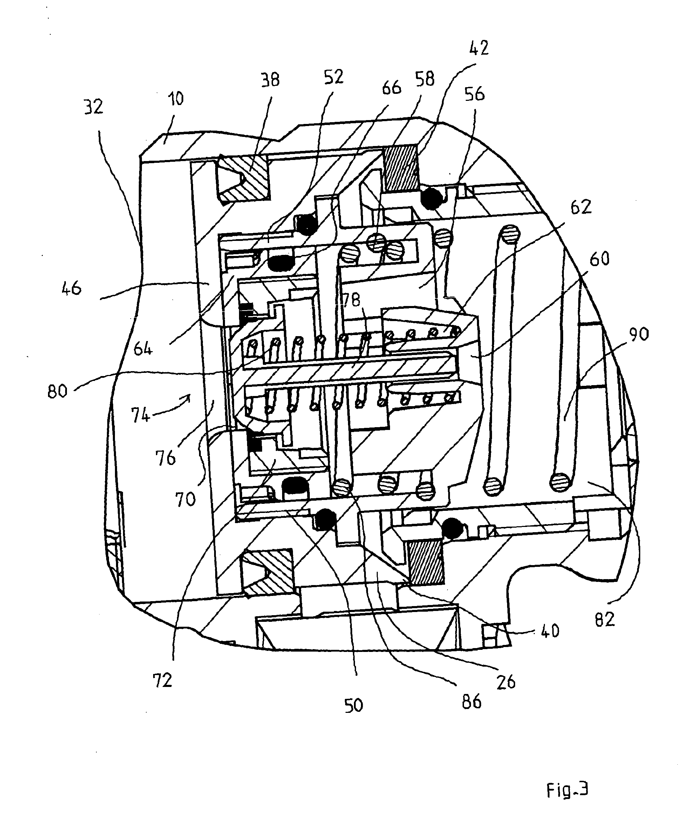

Tritt ausgehend von diesem Zustand eine Druckschwankung des Eingangsdrucks ein, so bewegt die Schraubenfeder den Kompensationskolben 64 zur stromaufwärtigen Seite hin. Damit wird das Volumen des Mitteldruckraumes 90 vergrößert und der Mitteldruck sinkt ebenfalls ab. Die Schraubenfeder 86 wird etwas entspannt. Es stellt sich ein neuer Gleichgewichtszustand ein, bei welchem eine etwas verminderte Druckdifferenz der Federkraft der etwas entspannten Schraubenfeder 86 entgegenwirkt. Der Kolben 26 wird dadurch noch nicht bewegt. Bei stärkerem Druckabfall des Eingangsdrucks sinkt die Druckdifferenz linear mit der Entspannung der Schraubenfeder aber weniger stark, als der Eingangsdruck sinkt. Schließlich erreicht der Kompensationskolben den stromaufwärtigen Anschlag, indem sich der Ringvorsprung 68 an den Rand 46 des Kolbens 26 anlegt. Dies ist in Figur 3 dargestellt. Jetzt kann ein weiterer Druckabfall des Eingangsdrucks nicht mehr durch Volumenvergrößerung des Mitteldruckraumes 90 kompensiert werden. Ein weiterer Druckabfall des Eingangsdruckes bewirkt ein Absinken der Druckdifferenz unter den Schwellwert. Der Kolben 26 wird durch die Schraubenfeder 82 in seine stromaufwärtige Endstellung gedrückt. Er hebt dann mit dem ringförmigen Ventilsitz 40 von der Ringdichtung 42 ab und stellt eine Verbindung zum Ablauf 34 her.

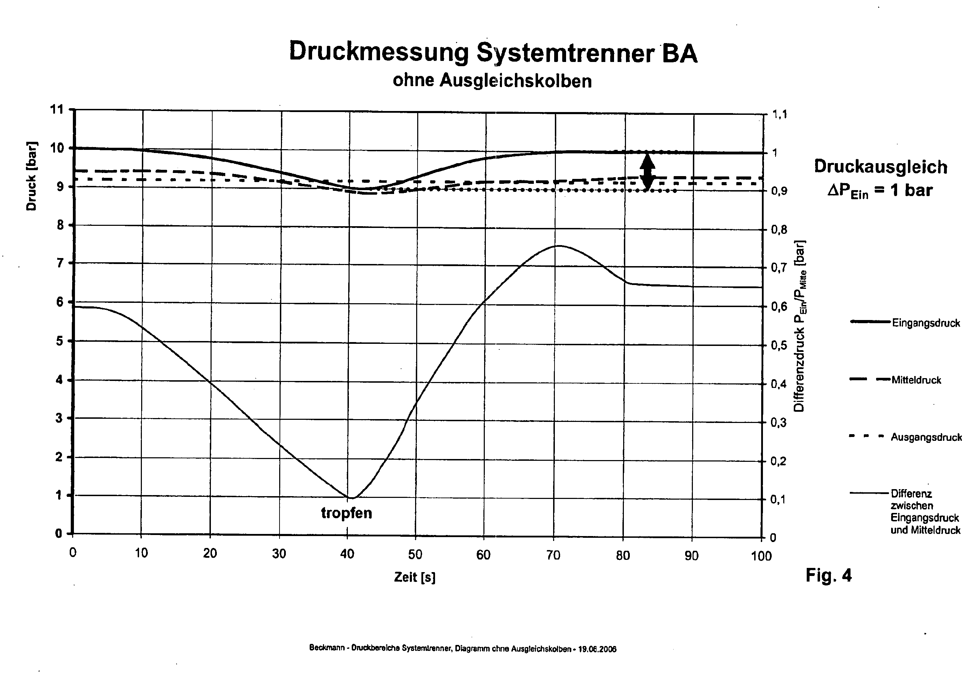

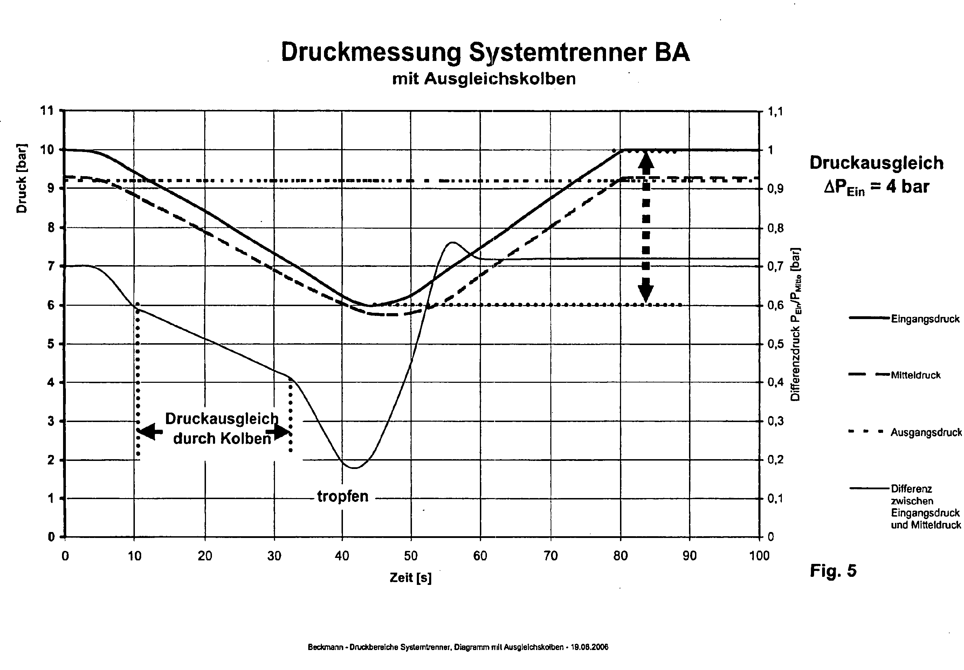

Das Verhalten des System- oder Rohrtrenners ist anhand von Fig.4 und 5 erläutert. Diese Figuren zeigen Diagramme, die mit Rohrtrennern ohne bzw. mit dem beschriebenen Kompensationskolben gemessen wurden.

Man erkennt aus beiden Diagrammen, daß normalerweise der Ausgangsdruck etwas unterhalb des Eingangsdrucks liegt. Die Druckdifferenz zwischen Eingangs- und Mitteldruck liegt zwischen 0,6 und 0,7 bar bzw. etwas über 0,7 bar. Das Auslaßventil mit dem Kolben 26 spricht an, wenn die Druckdifferenz unter etwa 0,4 bar absinkt. Dann "tropft" der Rohrtrenner. Eine relativ kleine Druckschwankung des Eingangsdrucks, wie sie in Fig.4 dargestellt ist, führt zu einem schnellen und starken Absinken der Druckdifferenz zwischen Eingangsdruck und Mitteldruck, wie duch die dünn ausgezogene Linie dargestellt ist. Der Rohrtrenner tropft über ein relativ großes Zeitintervall hinweg, bis der Eingangsdruck wieder seinen Normalwert erreicht hat.

In Fig.5 sind die entsprechenden Kurven für einen Rohrtrenner der oben beschriebenen Art dargestellt. Man sieht, daß die Druckdifferenz in dem Bereich von 10 sec bis etwa 32 sec dank des Druckausgleichs mit dem Kompensationskolben mit schwacher Neigung etwa linear absinkt. Erst dann findet ein stärkerer Abfall der Druckdifferenz statt, der ein Tropfen des Rohrtrenners zur Folge hat.

Dadurch wird ein unnötiges Öffnen des Auslaßventils vermieden. Der Druckausgleich bewegt sich jedoch noch in einem unkritischen Druckbereich. Bei einem Rückfluß von Heizungswasser durch einen undichten stromabwärtigen Rückflußverhinderer fährt der Kompensationskolben sofort in seine stromaufwärtige Endstellung. Dann findet kein Druckausgleich statt, und das Auslaßventil spricht sofort an.

Der Systemtrenner nach dem diesem Ausführungsbeispiel umfasst eine Anordnung, bei welcher vier Federn verwendet werden. Jeweils eine Feder ist in den Rückflußverhinderern vorgesehen. Eine weitere Feder dient zur Belastung des Auslaßventilkörpers. Eine vierte Feder beaufschlagt das Hubglied, welches geringe Druckschwankungen des Eingangsdrucks kompensiert. Jede der Federn weist eine Federkraft mit einer Toleranz auf. Bei der Einstellung der Druckverhältnisse addieren sich diese Toleranzen.

### Ausführungsbeispiel 2

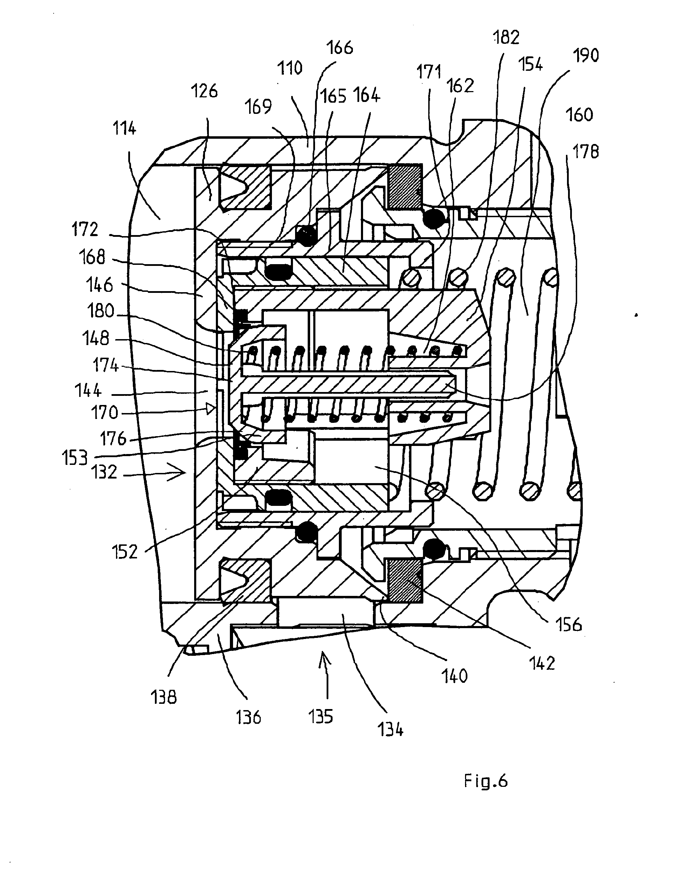

Die in den Figuren 6-9 dargestellte Anordnung dient dem gleichen Zweck und ist bis auf nachstehend beschriebene Kolbenanordnung baugleich wie die Armatur des ersten Ausführungsbeispiels.

In Fig.6 ist mit 110 ein rohrartiges Armaturengehäuse bezeichnet. Das Armaturengehäuse 110 weist einen Einlaß 114 auf. Das Armaturengehäuse 110 weist am entgegengesetzten Ende ein Auslaß (nicht dargestellt) auf. In dem Armaturengehäuse 110 ist ein Anschlag für einen Auslaßventilkörper, der von einem Kolben 126 gebildet ist, vorgesehen.

In dem Armaturengehäuse 110 ist eine zylindrische Kammer 132 gebildet. In der Kammer 132 ist der Kolben 126 geführt. Von der Kammer 132 geht ein Auslaß 134 ab, welcher einen mit der Atmosphäre verbundenen Ablaufstutzen 136 aufweist.

Der Kolben 126 dient als Auslaßventilkörper. Der Kolben 126 ist auf seiner Mantelfläche mit einer Dichtung 138 abdichtend in der zylindrischen Kammer 132 geführt. An seiner stromabwärtigen Stirnfläche bildet der Kolben 126 einen ringförmigen Ventilsitz 140. Der Ventilsitz 140 liegt in der in Fig.6 dargestellten, stromabwärtigen Endstellung an einer Sitzdichtung 142 an. Mit der Mantelfläche überdeckt der Kolben 126 den Auslaß 134. Das ist ein Auslaßventil 135.

Der Kolben 126 weist einen zentralen Durchgang 144 auf. An dem Kolben 126 ist an dessen stromaufwärtigem Ende ein nach innen ragender, ringscheibenförmiger Rand 146 gebildet. In dem Durchgang 144 sitzt ein stromaufwärtiger, allgemein mit 148 bezeichneter Rückflußverhinderer.

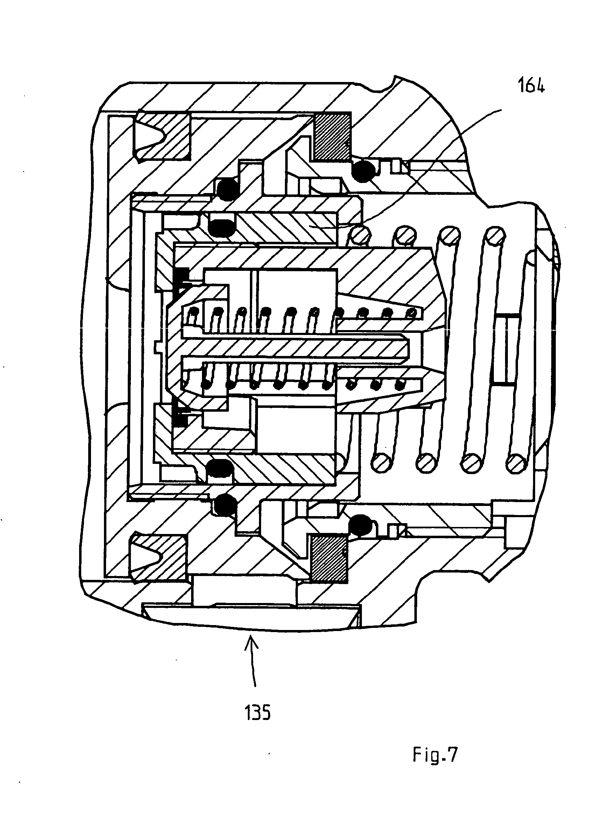

Der Rückflußverhinderers 148 weist ein Sitzteil 152 auf. Das Sitzteil 152 bildet den Ventilsitz 172 des Rückflußverhinderers 148. Das Sitzteil ist nach unten in Fig.7 offen und erstreckt sich in axialer Richtung über die gesamte Länge des Rückflußverhinderers 148. Das Sitzteil 152 ist an einen Federwiderlagerkörper 154 angeformt. Der Federwiderlagerkörper 154 ist mit einem außermittigen, axialen Durchgang 156 versehen. Weiterhin weist der Federwiderlagerkörper 154 um einen zentralen Durchbruch 160 des Federwiderlagerkörpers in axialer Richtung eine Ringnut 162 auf. Die Ringnut 162 ist zur stromaufwärtigen Seite hin offen. In der Ringnut 162 bildet der Federwiderlagerkörper 154 ein Federwiderlager für eine Schraubenfeder 180.

Der Ventilsitz 172 wirkt mit einem Ventilschließkörper 174 zusammen. Der Ventilschließkörper 174 weist einen konischen Kopf 176 und einen Schaft 178 auf. Der Schaft 178 ist in dem Durchbruch 160 geführt. Der Schaft 178 ist von der Schraubenfeder 180 umgeben. Die Schraubenfeder 180 ist mit einem Ende in der Ringnut 162 geführt und liegt mit dem anderen Ende an dem Kopf 176 an.

Das Sitzteil 152 ist in einen als Kompensationskolben ausgebildetes Hubglied 164 eingeschraubt. Der Kompensationskolben 164 ist schalenförmig mit einem zylindrischen Mantel und einem zentralen Durchbruch 170. Der Kompensationskolben 164 ist in einem Führungszylinder 165 axial beweglich geführt. Der Führungszylinder 165 ist mit einem Gewinde 169 in den Auslaßventilkörper 126 eingeschraubt und gegen dessen Innenfläche mit einer Dichtung 166 abgedichtet.

Der Führungszylinder 165 weist stromabwärtig einen nach innen ragenden Rand 171 auf. Der Rand 171 dient als Anschlag für den Kompensationskolben 164. Ein stromaufwärtiger Anschlag wird von dem Rand 146 des Auslaßventilkörpers 126 gebildet, an welchem der Kompensationskolben 164 mit einem Ringvorsprung 168 zur Anlage kommt.

Eine Schraubenfeder 182 ist an einer Schulter (nicht dargestellt) auf der Innenseite des Armaturengehäuses 110 abgestützt und liegt stromabwärts an stromabwärtigen Stirnfläche des Kompensationskolbens 164 an. Die Schraubenfeder 182 sucht den Kompensationskolben zur stromaufwärtigen Seite hin gegen den Rand 146 zu drücken. Die Federkraft der Feder 182 wirkt über den Kompensationskolben auch auf den Rand 146. Dadurch wird über den Rand 146 der Auslaßventilkörper 126 des Auslaßventils von der Feder 182 belastet. Der Schraubenfeder 182 wirkt die Druckdifferenz zwischen dem Eingangsdruck und dem Druck hinter dem stromaufwärtigen Rückflußverhinderer entgegen.

Stromab von der beschriebenen Anordnung sitzt in dem Armaturengehäuse ein stromabwärtiger Rückflußverhinderer (nicht dargestellt). Der stromabwärtige Rückflußverhinderer ist im Prinzip ähnlich aufgebaut wie der stromaufwärtige Rückflußverhinderer 148 und daher nicht im einzelnen beschrieben. Beide Rückflußverhinderer öffnen nur in Richtung vom Eingangsdruck zum Ausgangsdruck hin.

Zwischen dem Auslaßventilkörper 126 und dem stromabwärtigen Rückflußverhinderer ist ein Mitteldruckraum 190 gebildet.

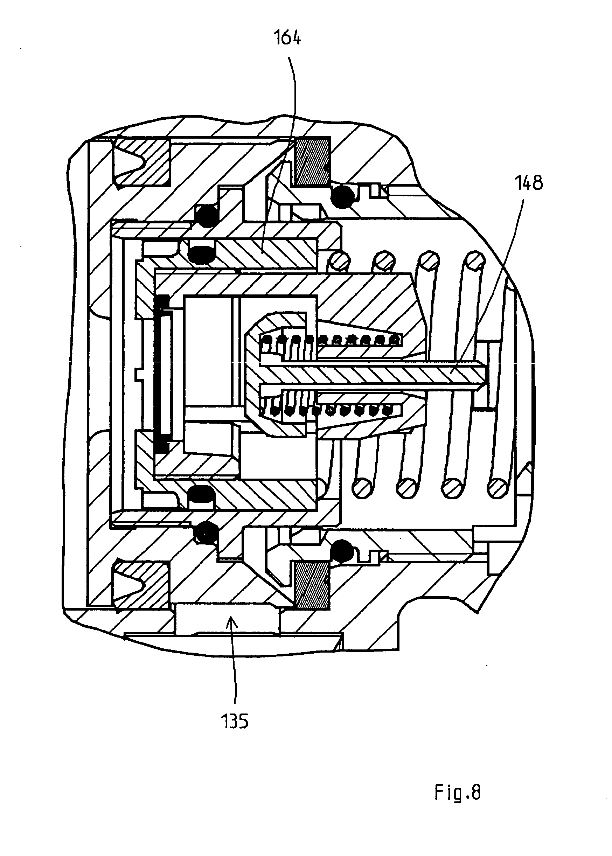

Die Schraubenfeder 180 des Rückflußverhinderers 148 ist stärker als die Schraubenfeder 182, die auf den Auslaßventilkörper 126 und den Kompensationskolben 164 wirkt. Daher öffnet der Rückflußverhinderer erst, wenn der Auslaßventilkörper 126 und der Kompensationskolben 164 durch die Druckdifferenz zwischen Eingangsdruck und dem im Mitteldruckraum herrschenden Mitteldruck in seine stromabwärtige Endstellung bewegt ist. Diese Situation ist in den Figuren 7 und 8 dargestellt. In Figur 6 ist die Anordnung in ihrer Betriebsstellung dargestellt. Dabei ist der Kompensationskolben in seiner stromaufwärtigen Endstellung, das Auslaßventil 135 ist geschlossen und der Rückflußverhinderer 148 ist geschlossen. In Figur 7 ist die Situation bei leicht erhöhtem Eingangsdruck dargestellt. In dieser "Kompensationsstellung" ist der Kompensationskolben 164 gegen den Druck der Feder 182 nach rechts in der Figur in seine stromabwärtige Endstellung verschoben. Der Rückflußverhinderer ist jedoch vollständig geschlossen.

In Figur 8 ist die Durchflußstellung dargestellt. Dann ist sowohl der Kompensationskolben 164 in seiner stromabwärtigen Endstellung als auch der Rückflußverhinderer 148 geöffnet. Das Auslaßventil 135 ist geschlossen.

Wenn in der Durchflußstellung der Durchgang zum Auslaßstutzen gegenüber dem Auslaß 135 und der Atmosphäre abgeschlossen ist, werden die Rückflußverhinderer von dem Wasserdruck aufgedrückt. Das Heizungssystem wird auf einen Ausgangsdruck aufgefüllt, der etwas unter dem Eingangsdruck liegt. Der Kompensationskolben 164 liegt unter dem Einfluß der Druckdifferenz gegen den Einfluß der Schraubenfeder 182 an dem stromabwärtigen Anschlag, d.h. an dem nach innen ragenden Rand 171 an, wie in Fig.8 dargestellt ist.

Tritt Änderung des Eingangsdrucks ein, so bewegt die Schraubenfeder den Kompensationskolben 164 zur stromaufwärtigen Seite hin. Damit wird das Volumen des Mitteldruckraumes 190 vergrößert und der Mitteldruck sinkt ebenfalls ab. Die Schraubenfeder 182 wird etwas entspannt. Es stellt sich ein neuer Gleichgewichtszustand, der in Figur 7 dargestellt ist, ein, bei welchem eine etwas verminderte Druckdifferenz der Federkraft der etwas entspannten Schraubenfeder 182 entgegenwirkt. Der Kolben 126 wird dadurch noch nicht bewegt.

Bei stärkerem Druckabfall des Eingangsdrucks sinkt die Druckdifferenz linear mit der Entspannung der Schraubenfeder aber weniger stark, als der Eingangsdruck sinkt. Schließlich erreicht der Kompensationskolben den stromaufwärtigen Anschlag, indem sich der Ringvorsprung 168 an den Rand 146 des Auslaßventilkörper 126 anlegt. Diese Betriebsstellung ist in Fig.6 dargestellt.

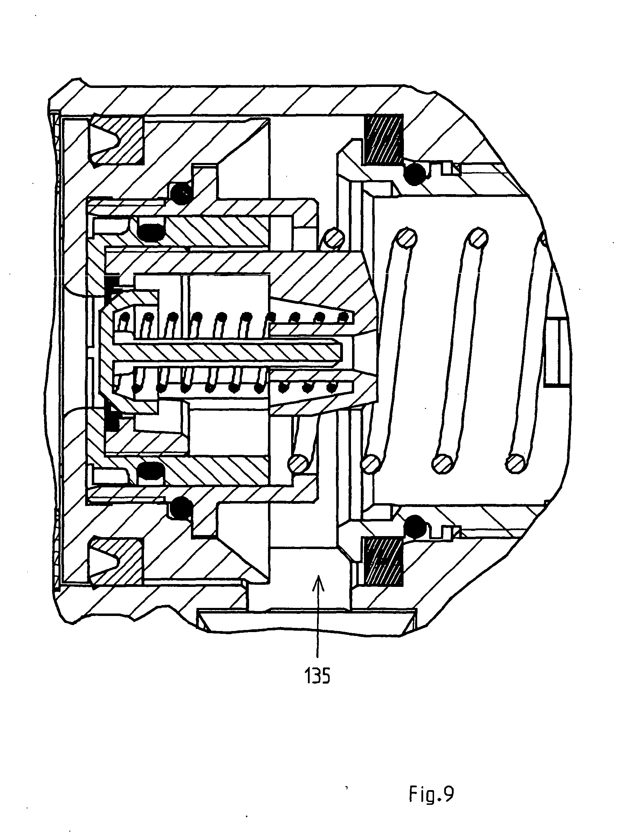

Jetzt kann ein weiterer Druckabfall des Eingangsdrucks nicht mehr durch Volumenvergrößerung des Mitteldruckraumes 190 kompensiert werden. Ein weiterer Druckabfall des Eingangsdruckes bewirkt ein Absinken der Druckdifferenz unter den Schwellwert. Der Auslaßventilkörper 126 wird durch die Schraubenfeder 182 in seine stromaufwärtige Endstellung gedrückt. Er hebt dann mit dem ringförmigen Ventilsitz 140 von der Ringdichtung 142 ab und stellt eine Verbindung zum Ablauf 135 her. Diese Trennstellung ist in Figur 9 dargestellt.

Das Verhalten des System- oder Rohrtrenners ist gegenüber der Anordnung im ersten Ausführungsbeispiel unverändert. Auch hier wird ein unnötiges Öffnen des Auslaßventils vermieden.

Da der Auslaßventilkörper und das Hubglied im vorliegenden Ausführungsbeispiel unterschiedliche Wirkdurchmesser aufweisen, ist die erforderliche Reihenfolge der Öffnungsbewegungen, nämlich zuerst Auslaßventilkörper, dann Kompensationskolben, anschließend Rückflußverhinderer bzw. die Schließbewegungen in umgekehrter Reihenfolge bei gleicher Federkraft automatisch vorgegeben.

## Patentansprüche

1. Systemtrenner zum physischen Trennen eines stromaufwärtigen Flüssigkeitssystems von einem stromabwärtigen Flüssigkeitssystem mittels eines Auslaßventils (35; 135) in Abhängigkeit von einem Druckgefälle, mit
(a) einem stromaufwärtigen Rückflußverhinderer (48; 148),
(b) einem stromabwärtigen Rückflußverhinderer (88), und
(c) einem als Kolben (26; 126) ausgebildeten Auslaßventilkörper, der strömungsmäßig zwischen den Rückflußverhinderern (48,88) angeordnet ist,
wobei
(d) stromaufwärts von dem stromaufwärtigen Rückflußverhinderer (48; 148) ein Eingangsdruck des stromaufwärtigen Flüssigkeitssystems, zwischen dem Auslaßventilkörper (26; 126) und dem stromabwärtigen Rückflußverhinderer (88) ein Mitteldruck in einem Mitteldruckraum (90; 190) und stromabwärts von dem stromabwärtigen Rückflußverhinderer (88) ein Ausgangsdruck des stromabwärtigen Flüssigkeitssystems herrscht, und
(e) an dem Auslaßventilkörper (26; 126) die Druckdifferenz zwischen Eingangsdruck und Mitteldruck in Schließrichtung einer in Öffnungsrichtung auf den Auslaßventilkörper wirkenden Belastungsfeder (82; 182) entgegenwirkt, **gekennzeichnet durch**
(f) ein den Mitteldruckraum (90; 190) begrenzendes Hubglied (64; 164), das auf einer Seite von dem Eingangsdruck und auf der anderen Seite von dem Mitteldruck beaufschlagt und von der Druckdifferenz gegen die Wirkung einer Belastungsfeder (86; 182) zwischen zwei Anschlägen (54, 46; 171, 146) beweglich ist.

2. Systemtrenner nach Anspruch 1, **dadurch gekennzeichnet, daß** die Belastungsfeder (182) stromaufwärtig an dem Hubglied (164) abgestützt ist und die Federkraft über das Hubglied (164) bei Erreichen seines stromaufwärtigen Anschlags (146) auf den Auslaßventilkörper (126) wirkt, so daß die Belastungsfeder (182), die auf das Hubglied (164) wirkt, gleichzeitig als Belastungsfeder (182) für den Auslaßventilkörper (126) dient.

3. Systemtrenner nach Anspruch 1 oder 2, **dadurch gekennzeichnet, daß** der stromaufwärtige Rückflußverhinderer (48; 148) in dem mit einem zentralen Durchgang (44; 144) versehenen Auslaßventilkörper (26; 126) sitzt, und das Hubglied ein Kolben (64; 164) mit einem zentralen Durchbruch (76; 176) ist, der seinerseits zwischen den Anschlägen in einem Gehäuse (52) des stromaufwärtigen Rückflußverhinderers (48) oder in einem Führungszylinder (65) geführt ist.

4. Systemtrenner nach Anspruch 3, **dadurch gekennzeichnet, daß**
(a) ein Ventilsitz (72; 153) des Rückflußverhinderers (48; 148) in dem Auslaßventilkörper (64; 164) sitzt und
(b) auf dem Ventilsitz (72; 153) ein federbelasteter Ventilkörper (74; 174) des Rückflußverhinderers (48; 148) aufsitzt.

5. Systemtrenner nach Anspruch 4, **dadurch gekennzeichnet, daß** der Ventilsitz des stromaufwärtigen Rückflußverhinderers (148) von einem offenen Sitzkörper (152) gebildet ist, der sich in axialer Richtung über die gesamte Länge des Rückflußverhinderers (148) erstreckt und stromabwärtig ein Federwiderlager des Rückflußverhinderers bildet.

6. Systemtrenner nach einem der Anspruche 2 bis 5, **dadurch gekennzeichnet, daß** der Führungszylinder (165), in welchem der das Hubglied bildende Kolben (164) geführt ist, innerhalb des Auslaßventilkörpers (126) angeordnet ist und stromabwärtig einen nach innen ragenden Rand (171) aufweist, welcher einen stromabwärtigen Anschlag für den Kolben (164) bildet und stromaufwärtig offen ist, so daß der Auslaßventilkörper (126) für den das Hubglied bildenden Kolben (164) einen stromaufwärtigen Anschlag bildet.

## Claims

1. System disconnector for physically disconnecting an upstream liquid system from a downstream liquid system by means of a outlet valve (35;135) depending on a pressure difference comprising
(a) an upstream backflow preventer (48; 148),
(b) a downstream backflow preventer (88), and
(c) an outlet valve body in the form of a piston (26; 126) arranged between the backflow preventers (48, 88),
wherein
(d) upstream of the upstream backflow preventer (48; 148) there is an inlet pressure of the upstream liquid system, a medium pressure is in a medium pressure space (90; 190) between the outlet valve body (26; 126) and the downstream backflow preventer (88) and an outlet pressure of the downstream liquid system is downstream of the downstream backflow preventer, and
(e) where the pressure difference at the outlet valve body (26; 126) between the inlet pressure and the medium pressure counteracts a biasing spring (82; 182) acting in the opening direction of the the outlet valve body,
**characterised by**
(f) an actuating member (64; 164) limiting the medium pressure space (90; 190), which is exposed to the inlet pressure on one side and to the medium pressure on the other side and which is adapted to move between two stops (54, 46; 171, 146) against the power of a spring (86; 182).

2. System disconnector according to claim 1, **characterised in that** the biassing spring (182) is supported by the actuating member (164) on the upstream side and the spring power acts on the outlet valve body (126) after reaching the upstream stop (146), so that the biasing spring (182) acting on the actuating member (164) simultaniously serves as a biasing spring (182) for the outlet valve body (126).

3. System disconnector according to claim 1 or 2, **characterised in that** the upstream backflow preventer (48; 148) is arranged in the outlet valve body provided with a central passage (44; 144) and the actuating member is a piston (64; 164) with a central recess (76; 176), which in turn is guided between the stops in a housing (52) of the upstream backflow preventer (48) or in a guiding cylinder (65).

4. System disconnector according to claim 3, **characterised in that**
(a) a valve seat (72; 153) of the backflow preventer (48; 148) is arranged in the outlet valve body (64; 164) and
(b) a spring biased valve body (74; 174) of the backflow preventer (48; 148) is arranged on the valve seat (72; 153).

5. System disconnector according to claim 4, **characterised in that** the valve seat of the upstream backflow preventer (148) is formed by an open seat body (152) extending in an axial direction over the entire length of the backflow preventer (148) and downstream defining a spring abutment of the backflow preventer.

6. System disconnector according to any of claims 2 to 5, **characterised in that** the guiding cylinder (165) guiding the piston (164) forming the actuating member is arranged inside the outlet valve body (126) and is downstream provided with a rim (171) inwardly extending, which defines a stop for the piston (164) the guiding cylinder (165) being open towards the upstream side, so that the outlet valve body (126) defines an upstream stop for the piston (164) forming the actuating member.

## Revendications

1. Disconnecteur pour la séparation physique d'un système de liquide amont par rapport à un système de liquide aval au moyen d'une soupape de décharge (35 ; 135) en fonction d'une différence de pression, muni de
(a) un clapet anti-retour amont (48 ; 148),
(b) un clapet anti-retour aval (88), et
(c) un corps de soupape de décharge configuré en piston (26 ; 126) et disposé à l'intérieur du courant entre les clapets anti-retour (48, 88),
(d) une pression d'admission du système de liquide amont régnant en amont du clapet anti-retour amont (48 ; 148), une moyenne pression régnant dans un espace de moyenne pression (90 ; 190) entre le corps de soupape de décharge (26 ; 126) et le clapet anti-retour aval (88) et une pression de sortie du système de liquide aval régnant en aval du clapet anti-retour aval (88), et
(e) dans le corps de soupape de décharge (26 ; 126), la différence de pression régnant dans le sens de fermeture entre la pression d'admission et la moyenne pression réagissant à un ressort de charge (82 ; 182) agissant sur le corps de soupape de décharge,
**caractérisé en ce que**
(f) un membre de levage (64 ; 164) délimitant l'espace de moyenne pression (90 ; 190) sollicité d'un côté par la pression d'admission et de l'autre par la moyenne pression peut se déplacer par la différence de pression contre l'action d'un ressort de charge (86 ; 182) entre deux butées (54, 46 ; 171, 146).

2. Disconnecteur selon la revendication 1, **caractérisé en ce que** le ressort de charge (182) s'appuie en amont sur le membre de levage (164) et la force du ressort (164) agit par l'intermédiaire du membre de levage (164) sur le corps de soupape de décharge (126) en atteignant sa butée amont (146) de sorte que le ressort de charge (182) agit sur le membre de levage (164), servant simultanément de ressort de charge (182) pour le corps de soupape de décharge (126).

3. Disconnecteur selon la revendication 1 ou 2, **caractérisé en ce que** le clapet anti-retour amont (48 ; 148) se trouve dans le corps de soupape de décharge (26 ; 126) pourvu d'un perçage central (44 ; 144), et le membre de levage est un piston (64 ; 164) muni d'un percement central (76 ; 176) qui est guidé de son côté entre les deux butées dans un boîtier (52) du clapet anti-retour amont (48) ou dans un cylindre de guidage (65).

4. Disconnecteur selon la revendication 3, **caractérisé en ce que**
(a) un siège de soupape (72 ; 153) du clapet anti-retour (48 ; 148) se trouve dans le corps de soupape de décharge (64 ; 164) et
(b) un corps de soupape (74 ; 174) taré par ressort du clapet anti-retour (48 ; 148) se trouve sur le siège de soupape (72 ; 153).

5. Disconnecteur selon la revendication 4, **caractérisé en ce que** le siège de soupape du clapet anti-retour amont (148) est formé par un corps de siège ouvert (152) qui s'étend dans le sens axial sur toute la longueur du clapet anti-retour (148) et forme en aval une contre-butée de ressort du clapet anti-retour.

6. Disconnecteur selon l'une quelconque des revendications 2 à 5, **caractérisé en ce que** le cylindre de guidage (165) dans lequel est guidé le piston (164) formant le membre de levage, est disposé à l'intérieur du corps de soupape de décharge (126) et présente en aval un rebord émergeant vers l'intérieur (171) qui forme une butée aval pour le piston (164) et est ouvert en amont de sorte que le corps de soupape de décharge (126) pour le piston formant le membre de levage (164) forme une butée amont.
